Europäisches Patentamt

European Patent Office

Office européen des brevets

(19)

(11) Veröffentlichungsnummer: **0 431 718 A2**

## (12) EUROPÄISCHE PATENTANMELDUNG

(21) Anmeldenummer: 90250306.9

(22) Anmeldetag: 07.12.90

(51) Int. Cl.⁵: **G03B 23/18**

(30) Priorität: 07.12.89 DE 3940771

(43) Veröffentlichungstag der Anmeldung:
**12.06.91 Patentblatt 91/24**

(84) Benannte Vertragsstaaten:
**CH FR GB IT LI**

(71) Anmelder: **Schulte, Gerd**
**Martin-Luther-Strasse 32-38**
**W-1000 Berlin 28(DE)**

(72) Erfinder: **Schulte, Gerd**
**Martin-Luther-Strasse 32-38**
**W-1000 Berlin 28(DE)**

(54) **Diaprojektor.**

(57) Bei einer besonders für die Überblendprojektion geeigneten Projektorkonstruktion mit vielfältigen Anwendungsmöglichkeiten ist ein erster Wechselschieber 1 zur seitlichen Beförderung je eines Dias 2 aus dem Magazin 3 in die Eingangs-Diabühne vorgesehen. Dort befindet sich zugeordneter Diaheber 4 zum Anheben des Dies 2 über die Projektionsebene hinaus. zur weiteren seitlichen Diabeförderung, die nun z. T. außerhalb des mit einem Schlitz⁶ versehenen Projektorgehäuses stattfindet, ist dort ein zweiter, parallel zum ersten arbeitender oberer Schieber 5 vorgesehen. Das Dia 2 wird von diesem bis zu einer jeweiligen Haupt-Diabühne geschoben, welche wiederum mit einem zugeordneten Diaheber 7, 8 zum Absenken in die, bzw. Anheben aus der Projektionsebene oder auch einem Fallschacht⁹ ausgerüstet ist.

Fig. 1

# DIAPROJEKTOR

Die Erfindung betrifft einen Diaprojektor nach der Gattung des Hauptanspruchs.

Ein derartiger, für die Überblendprojektion bestimmter Diaprojektor ist aus der DE-PS 35 17 376 bzw. 22 59 651 bekannt. Dabei sind die jeweils eine Diabühne und ein Beleuchtungssystem zusammenfassenden Kondensorschlitten in Richtung der optischen Achsen verschiebbar, um ein unabhängiges Be- und Entladen der beiden Diabühnen zu ermöglichen.

Nachteilig sind hier nicht nur die relativ großen bewegten Massen, sondern noch mehr daraus resultierende problematische Erschütterungseinflüsse auf den Bildstand und die Lampen, die zudem über störanfällige Schleifkontakte mit Strom versorgt werden müssen. Außerdem ist bei diesem Projektor weder die Projektion von Einzeldias, noch deren Entnahme - speziell bei der Verwendung von Kompaktmagazinen - möglich.

Ein anderer aus der DE-PS 36 22 114 bekannter Überblendprojektor mit querlaufendem Diamagazin weist zwar die vorgenannten Nachteile nicht auf, leidet dafür aber an einem übermäßig großen Objektivabstand. Gravierender erscheint hier aber noch, daß Fehlfunktionen der Zangengreifeinrichtung, bzw. ein Verklemmen der Dias beim Dauerbetrieb nicht sicher ausgeschlossen werden können.

Bei allen Überblendprojektoren mangelhaft und verbesserungswürdig ist schließlich das störend sichtbare Regelverhalten des Autofocus bei glaslosen Dias. Neben der Vermeidung der Nachteile obiger Projektoren und der Verbindung ihrer Vorteile liegt der Erfindung die Aufgabe zugrunde, eine besonders sichere, vielseitige, komfortable und anpassungsfähige Projektorkonstruktion aufzuzeigen, die sich für eine moderne Kompaktbauweise eignet.

Diese Aufgabe wird erfindungsgemäß dadurch gelöst, daß ein erster Wechselschieber 1 zur seitlichen Beförderung je eines Dias 2 aus dem Magazin 3 in die Eingangsdiabühne vorgesehen ist, wo sich ein zugeordneter Diaheber 4 zum Anheben des Dias 2 über die Projektionsebene hinaus befindet und dort wiederum ein zweiter, parallel zum ersten arbeitender, oberer Schieber 5 vorgesehen ist zur weiteren seitlichen Diabeförderung, die nun zum Teil außerhalb des mit einem Schlitz 6 versehenen Projektorgehäuses stattfindet, bis zu einer jeweiligen Haupt-Diabühne, welche wiederum mit einem zugeordneten Diaheber 7, 8 zum Absenken in die, bzw. Anheben aus der Projektionsebene oder auch einem Fallschacht 9 ausgerüstet ist.

Bei dem erfindungsgemäßen, insbesondere für die Überblendprojektion geeigneten Projektor sind die Projektionseinheiten somit stationär, in geringem Abstand zueinander, sowie parallel zum Diamagazin angeordnet. Der Transport eines Dias in eine äußere Position erfolgt also nicht unter Umgehuug eines anderen Projektionssystems oder zwischen zweien, sondern über mindestens ein inneres System hinweg. Tatsächlich werden auch nur relativ geringe Massen beim Diatransport bewegt, der charakteristischerweise platzsparend z. T. außerhalb des eigentlichen Projektorgehauses stattfindet.

Im Gegensatz zu einem ebenfalls extern arbeitenden Dreh- und Greifarmmechanismus, wie er etwa von Schachcomputern bekannt ist, befindet sich hier aber der eigentliche Transportmechanismus praktisch vollständig im Innern des Projektors.

Der besondere Vorteil der Erfindung liegt zum einen in der vielseitig an alle Gegebenheiten anpaßbaren Projektorkonstruktion, die ausschließlich grundsätzlich bewährte und als besonders sicher bekannte Transportmechanismen auf neue Weise miteinander verbindet. Quasi automatisch ergibt sich außerdem ein besonders einfacher Zugriff auf projizierte oder zu projizierende Dias, was wiederum zahlreiche Möglichkeiten zur Kontrolle und zur Beeinflussung des Ablaufs eröffnet.

weitere Vorteile, Einzelheiten und Merkmale der Erfindung ergeben sich aus der nachstehend, anhand der beiliegenden Zeichnung erfolgenden Beschreibung eines schematischen Ausführungsbeispiels mit z.T. symbolisch angedeuteten Projektorfunktionen. In der Zeichnung stellen dar:

Fig. 1 eine perspektivische Ansicht eines erfindungsgemäßen Projektors für die Überblendprojektion,

Fig. 2 eine Vorderansicht eines erfindungsgemäßen Projektors mit (kurzer) Dunkelpause und Diavorbetrachtung über Rückprojektion und

Fig. 3 eine perspektivische Ansicht eines erfindungsgemäßen Projektors für die Überblendprojektion von jeweils zwei bis drei unabhängigen Bildpaaren nach der DE-PS 33 13 935.

Ein Projektor gemäß der Erfindung weist demnach, je nach Verwendungszweck, insbesondere Überblendprojektion, eine unterschiedliche Anzahl von Projektionssystemen auf.

In jedem Fall vorhanden ist ein erster Wechselschieber 1 zur seitlichen Beförderung Je eines Dias 2 aus einem Magazin 3 in die primäre Eingangs-Diabühne (nicht dargestellt). Dort kann das Dia über ein optionales Beleuchtungssystem und ein entsprechendes Objektiv 10, einen Ablenkspiegel 12 und einen integrierten Rückprojektionsschirm 13 vorbetrachtet werden. Eine Diavorbetrachtung kann auch über eine Kombination zweier (Porro-)Prismen realisiert werden, z. B. seitlich schräg von oben usw.

Diese Vorbetrachtung erfolgt also unmittelbar vor der eigentlichen Projektion, was dem Vorführenden die Möglichkeit gibt, die so bislang nicht vorhanden war, seinen Vortrag entsprechend darauf einzustellen und ggf. auch auf das Zeigen des Dias zu verzichten.

Ein mindestens ebenso wichtiger Vorteil liegt aber in der Vorwärmung des jeweils zu zeigenden Dias, so daß dieses dann bei der folgenden eigentlichen Projektion nicht mehr springen kann, was eine Autofocus-Regelung weitgehend entbehrlich macht.

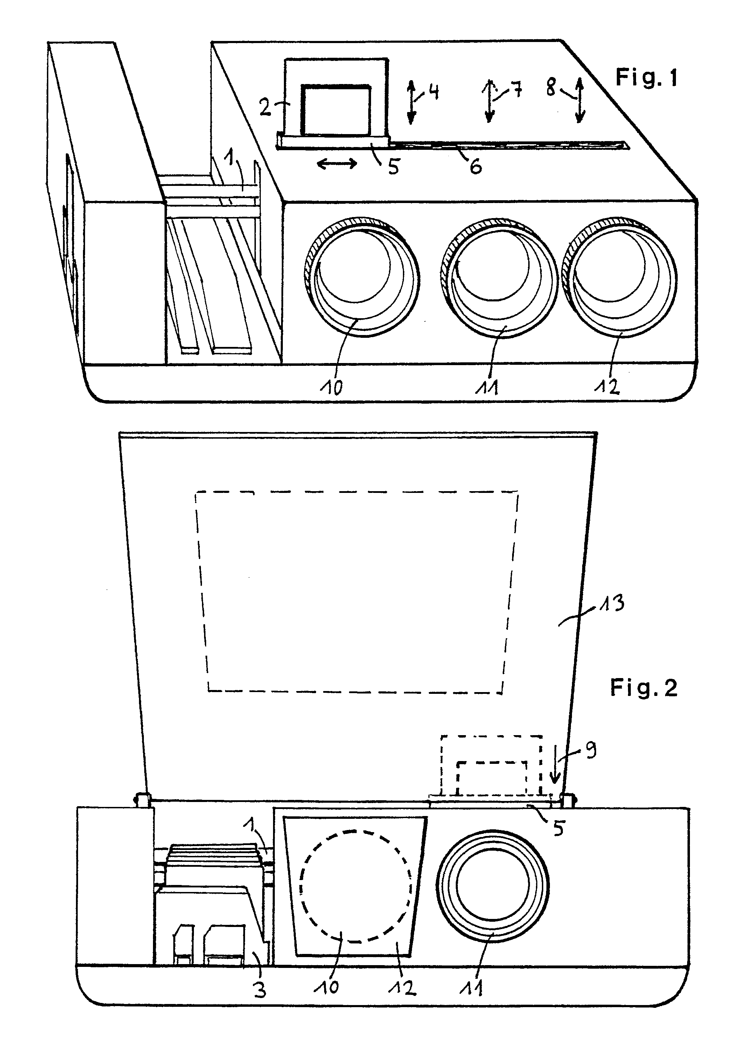

Zur eigentlichen Projektion wird das Dia 2 dann durch einen der Diabühne zugeordneten Diaheber 4 (in Fig. 1 symbolisch dargestellt) aus dem Strahlengang, über die Projektionsebene und aus dem Projektor hinaus, angehoben, kann aber auch dort entnommen bzw. ausgetauscht werden.

Ein zweiter, parallel zum ersten arbeitender oberer Schieber 5 befördert das Dia 2 anschließend entlang einem quer verlaufenden Schlitz 6 in der Projektoroberseite zu einem weiteren Diaheber 7 (8) oder Fallschacht 9 einer jeweiligen sekundären Haupt-Diabühne. Davon gibt es für die Überblendprojektion mindestens zwei, aber ggf. auch drei oder vier. Allerdings ist insbesondere im letzten Fall die erforderliche Zeit zum Wechsel mehrerer Dias aus einem einzigen Magazin mit in Rechnung zu stellen.

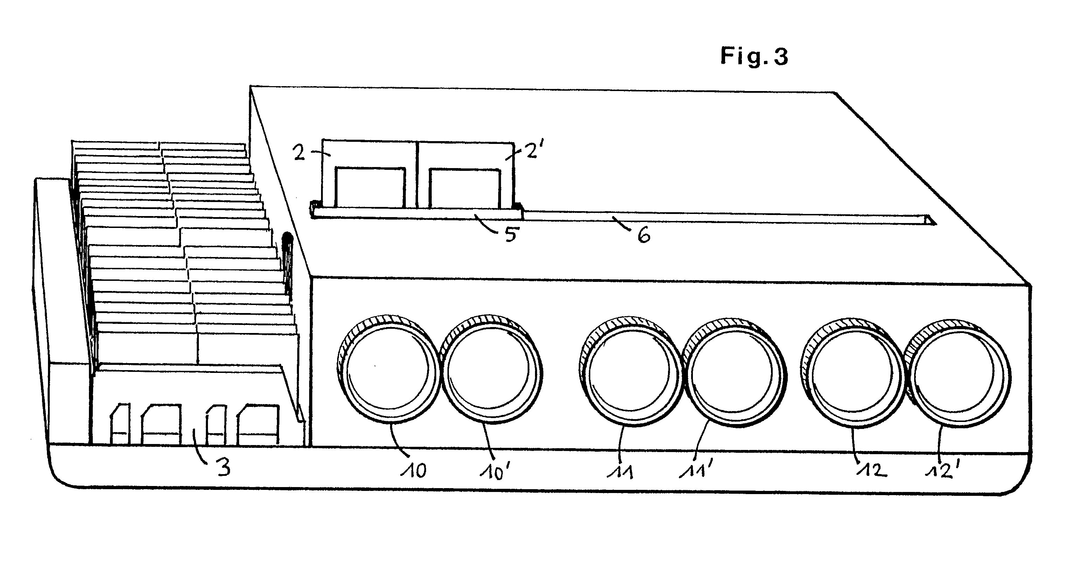

Es wird deshalb nach der DE-PS 33 13 935 ein weiterer Überblendprojektor vorgeschlagen, Fig. 3, der in der Lage ist, über ein spezielles Magazin mit etwa 101 mm Gefachlänge gleichzeitig jeweils zwei 5 x 5-Dias, bzw. ein 5 x 10-Stereo-Dia in praxisgerechter Geschwindigkeit zu befördern.

Ein solcher Projektor kann bei einfachster, zentral gesteuerter Handhabung auf relativ kleinem Raum praktisch vier einzelne AV-Projektoren ersetzen, bei speziellen Anwendungen (Darstellung von Bewegungsphasen u. ä.) sogar deren sechs.

In Ergänzung hierzu kann der Breitmagazin-Projektor sinnvollerweise noch durch eine zutätzlich einschwenkbare Magazinführungsleiste auch für die Verwendung von Normalmagazinen ausgerüstet sein.

Für die erfindungsgemäßen Projektoren allgemein gilt ansonsten folgendes: Während ein zweites, drittes oder viertes Haupt-Projektionssystem immer auch mit einem Diaheber zum Absenken eines Dias in die Diabühne und zum nachfolgenden Anheben zwecks Rückführung desselben ausgerüstet sein muß, ist im Falle des ersten Haupt-Projektionssystems 7, 11 bzw. 9, 11, welches dem primären Eingangs-System 4, 10 benachbart ist, auch ein einfacher Fallschacht möglich, Fig. 2. Dieser muß dann allerdings noch durch einen Rückführ-Stößel ergänzt werden, der das projizierte Dia direkt wieder in die Eingangs-Diabühne zurück befördert, während unmittelbar anschließend das bereits in Warteposition befindliche Dia 2, wie in Fig. 2 dargestellt, in Projektionsstellung fällt. Hierbei wird zweckmäßigerweise der hintere, rückholende Teil des ersten Wechselschiebers 1 asymmetrisch so ausgebildet, daß das Dia leicht, seitlich ausgelenkt daran vorbeigleitet und dort wieder "einrastet". Aus der Eingangs-Diabühne kann das Dia nun wieder in das Magazin 3 zurückbefördert oder wahlweise über den Heber 4 entnommen werden.

Ein Wechselschieber, wie er in Fig. 1 angedeutet ist, 1, bei dem der Mitnehmer- und Antriebsteil zusammen einen etwa U-förmigen Bügel bilden, wobei der Antrieb über den unterhalb der Diabühne verlaufenden Schenkel erfolgt, hat mehrere Vorteile. Er läßt sich nicht nur automatisch zuverlässig an verschiedene Magazin-Typen anpassen, sondern ist auch von oben offen zugänglich, so daß der erfindungsgemäße Diaheber 4 in der gezeichneten Position (Fig. 1) ungehindert arbeiten kann. Allerdings bedingt dieser Wechselschieber-Typ immer jeweils eine zusätzlich Leerlauf-Rückholbewegung zum Magazin, damit dessen Pilgerschrittgetriebe bei der Ansteuerung des nächsterforderlichen Magazinfaches nicht vom Mitnehmer blockiert wird. Die Verbindung des Rückholers zum unteren Antrieb erfolgt zweckmäßig seitlich versetzt zur Diaführungsbahn an dieser entlang.

Natürlich ist auch ein oben angetriebener Wechselschiebertyp verwendbar, bei dem Mitnehmer und Rückholernicht in gerader Linie verbunden sind, sondern setlich versetzt, unter Umgehung des Heber-Arbeitsbereichs. Der das Dia unten U-förmig umfassende Diaheber ist zur prismatischen Diaführung unten noch zusätzlich V-förmig ausgeformt. Der rechtwinklig daran ansetzende, drehbar gelagerte Hebelarm verläuft zwischen den Kondensor-Systemen nach hinten und tastet dort in. bekannter Weise die jeweilige Kurvenbahn einer Steuerscheibe oder -Walze ab. Gleiches gilt sinngemäß für den Antrieb des oberen Schiebers 5, der die einzelnen Diabühnen miteinander verbindet. Vom mittleren Heber 7 gesteuert sorgt schließlich noch eine verschwenkbare Abdeckung dafür, daß beim Diatransport zwischen den Systemen 10 und 12 kein Dia in den mittleren Schacht fällt.

Eine ganze Umdrehung der Steuerscheibe(n) entspricht nun einem kompletten Wechselzyklus beider Projektions-Systeme 7, 11 und 8, 12 eines Zweifach-Überblendprojektors nach Fig. 1 und 3.

Im folgenden ist ein möglicher Betriebsablauf dargestellt, der einige redundante Phasen enthält und noch vereinfacht werden kann. Insbesondere wurde bei der Aufstellung darauf geachtet, daß das Programm in verschiedenen wichtigen Positionen angehalten und ggf. in entgegengesetzter Richtung fortgesetzt werden kann. Die Stellung des oberen Schiebers wurde so festgelegt, daß durch den Schlitz 6 eine maximale Belüftung des gerade projizierten Dias erreicht wird.

Schließlich ist eine Vereinfachung auch dadurch möglich, daß der erste Wechselschieber 1 und der obere Schieber 5 in einer einzigen Schieberkonstruktion zusammengefaßt werden. Weiterhin kann die vertikale Hub- und die horizentale Schiebe-Bewegung zugleich ausgeführt werden, was zu einer Schräge Führt, über die die Dias bei einer horizontalen Schieberbewegung gleiten können und dabei gleichzeitig eine ansteigende oder absenkende Höhenbewegung ausführen.

Betriebsablauf eines Zweifach-Überblendprojektors

1) Magazintransport auf Diafach Nr. 1
2) Wechselschieber 1 bringt Die in Eingangs-Diabühne von System 10
3) Diavorbetrachtung von Dia Nr. 1
4) Erster Heber 4 bringt Die Nr. 1 nach oben
5) Oberer Schieber 5 bringt Dia Nr. 1 von System 10 zu 11 (Wechselschieber 1 von System 10 zum Magazin)
6) Heber 7 bringt Die Nr. 1 in Diabühne von System 11
7) (Überblend-)Projektion von Die Nr. 1 in System 11, oberer Schieber 5 von System 11 zu 12
8) Heber 8 von System 12 nach oben, Magazintransport auf Diafach Nr. 0
9) oberer Schieber 5von System 12 zu 10 (Wechselschieber 1 von Magazin zu System 10)
10) Erster Heber 4 nach unten
11) Wechselschieber 1 zum Magazin = Halber Zyklus fertig
12) Magazintransport auf Diafach Nr. 2
13) Wechselschieber 1 bringt Dia Nr. 2 aus Magazin in Eingangs-Diabühne von System 10
14) Diavorbetrachtung von Dia Nr. 2
15) Erster Heber 4 bringt Die Nr. 2 nach oben
16) Oberer Schieber 5 bringt Dia Nr. 2 von System 10 zu 12 (Wechselschieber 1 von System 10 zum Magazin)
17) Heber 8 bringt Dia Nr. 2 in Diabühne von System 12
18) Überblend-Projektion von (Dia Nr. 1 auf) Dia Nr. 2, oberer Schieber 5 von System 12 zu 11
19) Heber 7 von System 11 bringt Dia Nr. 1 nach oben, Magazintransport auf Diafach Nr. 1
20) Oberer Schieber 5 bringt Dia Nr. 1 von System 11 zu 10 (Wechselschieber 1 v. Magazin zu System 10)
21) Erster Heber 4 bringt Dia Nr. 1 nach unten
22) Wechselschieber 1 bringt Dia Nr. 1 zum Magazinfach Nr. 1

Das Programm wiederholt sich dann sinngemäß mit Schritt 1) und einem Magazintransport auf Diafach Nr. 3.

Durch einen getrennten Magazinantrieb und eine erweiterte Steuerelektronik können aber auch andere Magazinfächer außer der Reihe angewählt werden. Gleiches gilt sinngemäß für den Wechselschieber 1 und die frei wählbare Zusatzprojektion mit dem System 10.

Weitere, hier nicht im einzelnen aufgeführte Modifikationen und Variationen des Betriebsablaufs sind möglich, ohne daß das Grundprinzip der Erfindung verlassen wird. Dies gilt insbesondere, wie schon vorher angedeutet, für die nicht unbedingt festgelegte Art des Be- und Entladens des dem Eingangs-System 4, 10 benachbarten ersten Haupt-Projektionssystem 7, 11 bzw. 9, 11. Sind z. B. weitere, grundsätzlich mit einem Diaheber und/oder einem Fallschacht ausgerüstete Haupt-Projektionssysteme vorhanden, kann beim ersten Haupt-Projektionssysteme auch ganz auf Heber und Fallschacht verzichtet werden.

Zugunsten einer besonders schmalen Bauform Kann aber auch auf die Möglichkeit der Diavorbetrachtung verzichtet werden und ein aus insgesamt nur zwei Projektionssystemen bestehender, vollwertiger Überblendprojektor realisiert werden, wenn jeweils ein Zweikammer-Fallschachtverwendet wird, wie er z. B. aus der DE-PS 2134 308 bekannt ist.

Der Diaheberantrieb kann weiterhin außer durch ein Hebelarm-System auch jeweils durch einen prozessorgesteuerten (Schritt-)Motor mit Ritzel und eine vertikal am Heber angebrachte Zahnung bewirkt werden.

Bein Erkennen des Magazinendes über eine optische oder mechanische Abtastung, kann schließlich noch der Diawechsel derart gesteuert werden, daß beim Magazinwechsel ein Dia im Projektor verbleibt, das bei der Projektion des ersten Dias aus dem nächsten Magazin automatisch in der Entnahme-Position, Fig 1, gestoppt wird und entnommen werden kann.

**Ansprüche**

1. Diaprojektor mit zumindest zwei zu einem Gerät vereinigten Bildwerfern, die in horizontaler Ebene angeordnet Je ein Objektiv (10, 11, 12), eine Diabühne, ein Beleuchtungssystem und eine Führung für ein gemeinsames Gefachmagazin (3) aufweisen, mit einer Einrichtung zum Diawechsel, **dadurch gekennzeichnet,** daß ein erster Wechselschieber (1) zur seitlichen Beförderung Je eines Dias (2) aus dem Magazin (3) in die Eingangs-Diabühne vorgesehen ist, wo sich ein zugeordneter Diaheber (4) zum Anheben des Dias (2) über die Projektionsebene hinaus befindet und dort wiederum ein zweiter, parallel zum ersten arbeitender, oberer Schieber (5) vorgesehen ist zur weiteren seitlichen Diabeförderung, die nun zum Teil außerhalb des mit einem Schlitz (6) versehenen Projektorgehäuses stattfindet, bis zu einer jeweiligen Haupt-Diabühne, welche wiederum mit einem zugeordneten Diaheber (7, 8) zum Absenken in die, bzw. Anheben aus der Projektionsebene oder auch einem Fallschacht (9) ausgerüstet ist.

2. Diaprojektor nach Anspruch 1, dadurch gekennzeichnet, daß die Eingangs-Diabühne mit einem Beleuchtungssystemund mit mindestens einem Ablenkspiegel (12) zur Dia-Vorwärmung und -Betrachtung versehen ist.

3. Diaprojektor nach Anspruch 2, dadurch gekennzeichnet, daß das Eingangs-System durch ein Objektiv (10) und eine Mattscheibe für die Rückprojektion ergänzt wird.

4. Diaprojektor nach einem der vorhergehenden Ansprüche, dadurch gekennzeichnet, daß der für die Verwendung eines Magazins doppelt so großer Gefachlänge konzipierte Projektor durch zusätzlich in die Magazinbahn einschwenkbare Füghrungsmittel auch für die Projektion aus Normalmagazinen umgerüstet werden kann.

5. Diaprojektor nach einem der vorhergehenden Ansprüche, dadurch gekennzeichnet, daß eine Steuerelektronik vorgesehen wird, die bei durch Abtastung erkanntem Magazinende bewirkt, daß beim Magazinwechsel ein Dia (2) im Projektor verbleibt, welches bei der Projektion des ersten Dies aus dem nächsten Magazin automatisch in der Entnahme-Position (Fig. 1) gestoppt wird.

6. Diaprojektor für die Überblendprojektion nach einem der vorhergehenden Ansprüche, dadurch gekennzeichnet, daß zusätzliche getrennte Antriebsmittel für Magazin (3) und Wechselschieber (1) vorgesehen sind, um einen von den anderen Systemen (7, 11 und 8, 12) unabhängigen Betrieb des Eingangssystems (4, 10) zu erreichen.

Fig. 1

Fig. 2

Fig. 3